# EUROPÄISCHE PATENTSCHRIFT

(11) **EP 2 627 689 B1**
(45) Veröffentlichungstag und Bekanntmachung des Hinweises auf die Patenterteilung: **14.12.2016**
(21) Anmeldenummer: 11779090.7
(22) Anmeldetag: 13.10.2011
(51) Int. Cl.: C08G 18/48, C08G 18/79, C08L 75/04, B60C 5/00

(54) **SYNTHETISCHE WEICHMACHERÖLE FÜR POLYURETHANFÜLLUNGEN**
SYNTHETIC PROCESSING OILS FOR POLYURETHANE FILLINGS
HUILES PLASTIFIANTES DE SYNTHÈSE POUR CHARGER DES POLYURÉTHANES

(30) Priorität: 13.10.2010 DE 102010048165
(43) Veröffentlichungstag der Anmeldung: 21.08.2013
(73) Patentinhaber: Tudapetrol Mineralölerzeugnisse Nils Hansen KG, 20457 Hamburg (DE); H&R Ölwerke Schindler GmbH, 21107 Hamburg (DE)
(72) Erfinder: BERGMANN, Cristina, 22535 Hamburg (DE); TRIMBACH, Jürgen, 21465 Reinbeck (DE)
(74) Vertreter: Eisenführ Speiser
(86) Internationale Anmeldenummer: PCT/EP2011/005132
(87) Internationale Veröffentlichungsnummer: WO 2012/048874

(56) Entgegenhaltungen:
- WO-A1-2005/113628
- US-A- 5 070 138
- US-A- 5 696 184

## Beschreibung

Gegenstand der Erfindung ist die Verwendung einer Polyurethan-Zusammensetzung, enthaltend mindestens a) ein Polyurethan, hergestellt aus i) einem Polyisocyanat und/oder einem Diisocyanat und ii) einem Polyol und/oder einem Diol, und b) ein Alkylbiphenyl oder Arylbiphenyl oder ein Alkylnaphthalin oder Arylnaphthalin oder eine Mischung hiervon als Füllung für Reifen.

Unterschiedlichste Kunststoffe werden heutzutage als synthetisch zugängliche Materialien für die verschiedensten Anwendungen genutzt. Dabei lassen sich die Eigenschaften nicht nur durch entsprechende Wahl der Monomere auf die gewünschten Anwendungen zuschneidern, sondern auch zusätzliche Stoffe, die dem fertigen Polymer beigemischt werden oder aber bereits mit in den Ansatz gegeben werden und daher während der Polyreaktion anwesend sind, bestimmen die Eigenschaften des fertigen Kunststoffes maßgeblich mit. Eine der wichtigsten Zusatzstoff-Gruppen im Bereich der Kunststoffe ist die der Weichmacher. Diese beeinflussen die Dehnbarkeit, Biegsamkeit und Belastbarkeit eines Materials und spielen eine tragende Rolle bei der Einstellung der gewünschten Eigenschaften von Kunststoffen. In der Literatur findet man für Weichmacher im Kunststoffbereich auch häufig die Bezeichnung "Extenderöle"(H.H. Le et al., KGK, Nr. 7-8/2004, S. 355; J. Bowman et al., KGK, Nr. 1-2/2004, S. 31; M.L. Deviney et al., Rubber Chemistry and Technology, Vol. 46/1973, S. 127.

Ein bedeutender Bereich für Weichmacher bei Kunststoffen liegt in der Reifenproduktion (US 5070138, US2004/0154718 A1. Als Grundmaterial für Massivreifenfüllungen wird u.a. Polyurethan verwendet. Polyurethane werden üblicherweise durch Polyaddition von Poly- bzw. Diisocyanaten mit Poly- bzw. Diolen erhalten. Polyurethane weisen polare Gruppen auf. Es kommt innerhalb des Polyurethans zur Ausbildung von Wasserstoffbrückenbindungen. Ein Weichmacher für ein Polyurethan muss daher, damit eine möglichst gleichmäßige Verteilung in dem Kunststoff möglich ist, eine ausreichende Polarität aufweisen.

Bisher wurde insbesondere DAE (distillate aromatic extract) als Weichmacher in Reifen, auch solchen auf der Basis von Polyurethan, eingesetzt, das diverse vorteilhafte Eigenschaften aufweist. DAE fällt als Nebenprodukt bei der Herstellung von Basisölen für Schmieröle an und ist daher kostengünstig J. Trimbach, GAK 7, Jahrgang 63/2010, S. 425). Es besitzt eine gute Verträglichkeit mit Elastomeren, lässt sich aufgrund im Allgemeinen niedriger Viskositäten gut einmischen und bewirkt gute Nassrutscheigenschaften der Reifen (V. Null, KGK, Nr. 12/99, S.799). Nachteilig an DAE ist jedoch, dass dieses bei Verschleiß der Reifen, bei UV-Bestrahlung und erhöhten Temperaturen durch Abrieb und Ausdampfen in die Umwelt gelangt und dort seine schädigende Wirkung entfalten kann, denn DAE enthält erhebliche Mengen an polyzyklischen aromatischen Kohlenwasserstoffen (International Agency for Research on Cancer: "Mineral oils" in: IARC Monographs on the Evaluation of the Carcinogenic Risk of Chemicals to Humans, Vol. 33, Lyon, Frankreich, April 1984, S. 148; S.M.A. Doak et al., Dr. J. Cancer 48/1983, S. 429), in jedem Fall mehr als 3 Gew.-%, bestimmt nach der Methode IP 346.

Polyzyklische Aromaten sind solche aromatischen Kohlenwasserstoffe, die mehr als drei kondensierte aromatische Ringe enthalten. Dieses schließt heterozyklische Verbindungen mit Schwefel- und/oder Stickstoff ein. Zudem können die Ringe mit Alkyl- und/oder Cycloalkylgruppen substituiert sein. In den vergangenen Jahren wurde zunehmend das gesundheitsschädliche, carcinogene Potential der polyzyklischen Aromaten erkannt, die gleichzeitig zudem fettlöslich sind, so dass es zu einer Bioakkumulation kommt (IARC Monographs on the Evaluation of Carcinogenic Risks to Humans, Vol. 92/2010; A. J. Rust et al. Environmental Toxicology and Chemistry, 23/2004, S. 2604; E. Stephenson et at., Environmental Toxicology and Chemistry, 22/2003, S.2926).

Aufgrund der Direktive EG 769/76/EEC, ergänzt durch die Richtlinie 2005/69/EG vom 16. November 2005, ist eine Verwendung von Prozessölen nur noch zulässig, sofern diese einen Gehalt an polyzyklischen Aromaten von weniger als 3 Gew.-%, bestimmt nach der Methode IP 346, aufweisen. Keinesfalls dürfen Weichmacher in der Reifenherstellung genutzt werden, wenn sie mehr als 1 ppm Benzo(a)pyren enthalten oder der Gehalt aller polyzyklischen aromatischen Kohlenwasserstoffe über 10 ppm beträgt, wobei diese Werte der Richtlinie EG 769/76/EEC entsprechend zu bestimmen sind.

DAE als Weichmacher in Reifen verlangt daher einen geeigneten Ersatz.

Ein bekanntes Prozessöl mit einem geringeren PCA-Gehalt als DAE ist beispielsweise TDAE (Treated distillate aromatic extract), das man entsprechend bald als Ersatz für das herkömmlich als Weichmacher verwendete DAE herangezogen hat (A. Kuta et al., KGK, Nr. 10/2005, S. 529; H.-M. Issel et al., KGK, Nr. 10/2005, S.529).

TDAE enthält polyzyklische Aromaten in Mengen von ≤ 3 Gew.-%, so dass hierdurch bereits eine erhebliche Verbesserung hinsichtlich der Umwelt- und Gesundheitsgefährdung erreicht wird. Allerdings ist TDAE nicht für jede Art Polymer als Weichmacher geeignet. Ein typisches TDAE (z.B. Vivatec 500) enthält beispielsweise 25% aromatische Kohlenstoffatome, 30% naphthenische Kohlenstoffatome und 45% paraffinische Kohlenstoffatome, bestimmt nach der Methode ASTM D 2140. TDAE enthält folglich vergleichsweise wenig Aromaten, dafür aber höhere Anteile an paraffinischen Kohlenwasserstoffen und ist damit eher schlecht mit polaren Verbindungen mischbar.

Polymere, für welche TDAE als Weichmacher nicht geeignet ist, sind insbesondere Polyurethane, da Polyurethane eine polare innere Struktur aufweisen, wodurch keine gleichmäßige Verteilung, sondern vielmehr eine örtliche Konzentration des Weichmachers in dem Polyurethan erfolgt.

Aufgabe war es daher, einen für Polyurethane geeigneten Weichmacher als Ersatzstoff für DAE zu finden und ein einen Weichmacher enthaltendes Polyurethan bereitzustellen, das durch das gesamte Material hindurch gleichmäßige und vorteilhafte Eigenschaften gegenüber reinem Polyurethan zeigt, wobei aber der Weichmacher gegenüber herkömmlich verwendeten Weichmachern möglichst wenig umwelt- und gesundheitsschädlich sein sollte und wobei der Weichmacher sich für die Polyurethanherstellung für den Reifenbereich eignen sollte.

Die Aufgabe wird gelöst durch die Verwendung einer Polyurethan-Zusammensetzung, enthaltend mindestens a) ein Polyurethan, hergestellt aus i) einem Polyisocyanat und/oder einem Diisocyanat und ii) einem Polyol und/oder einem Diol, und b) ein Alkylbiphenyl oder Arylbiphenyl oder ein Alkylnaphthalin oder Arylnaphthalin oder eine Mischung hiervon für Reifenfüllungen. Dabei kann zusätzlich ein Mineralöl, TDAE (treated distillate aromatic extract), MES (Mild extraction solvate), RAE (Residual aromatic extract) oder NAP (Naphthen), eingesetzt werden.

Die Vorsilbe "Aryl" steht für alle Reste, die sich von aromatischen Kohlenwasserstoffen ableiten und folglich ein aromatisches Grundgerüst aufweisen.

Die Vorsilbe "Alkyl" steht für alle Reste, die sich von den Alkanen ableiten und deren Kohlenstoffkettenlänge bevorzugt von 1 bis 12 Kohlenstoffatomen beträgt, bevorzugt Methyl-, Ethyl-, Propyl-, Butyl-, Pentyl- und Hexylreste, sowie deren Isomere, beispielsweise Isopropylreste, Isobutylreste oder Isopentylreste. Isopropylreste haben sich als besonders vorteilhaft erwiesen. Dabei sind von den Begriffen "Alkylbiphenyle" und "Alkylnaphthaline" erfindungsgemäß auch solche Verbindungen umfasst, die mehr als einen Alkylrest enthalten, wie etwa die zuvor genannten Diisopropylbiphenyle. Auch sind erfindungsgemäß unter "Alkylresten" solche Reste zu verstehen, die sich von den Cycloalkanen ableiten, d.h. z.B. Cyclohexylreste.

Bevorzugt ist der Alkylrest ein Isopropylrest.

Als Alkylbiphenyl oder Alkylnaphthalin wird bevorzugt mindestens eine Verbindung, ausgewählt aus der Gruppe der Diisopropylbiphenyle, Isopropylnaphthaline oder der Isopropylbiphenyle, eingesetzt.

Bevorzugt werden als Arylbiphenyle und Arylnapthaline solche verwendet, bei denen der Arylrest Phenyl-, Benzyl-, Toluyl- oder *ortho*-Xylyl ist, wobei eine Verbindung auch mehrere Arylreste aufweisen kann.

Ebenso sind erfindungsgemäß als Weichmacher auch solche Biphenyle und/oder Naphthaline geeignet, die einen oder mehrere Arylreste und einen oder mehrere Alkylreste aufweisen.

Bevorzugt handelt es sich bei den in der Polyurethan-Zusammensetzung enthaltenen Verbindungen mindestens um 1-Phenyl-2,3-di(propan-2-yl)-benzol, 1-Phenyl-4-(propan-2-yl)benzol oder ein Isomerengemisch von Isopropylbiphenyl, 1-(Propan-2-yl)naphthalin, 2-(Propan-2-yl)naphthalin oder ein Isomerengemisch von Isopropylnaphthalin, ggf. in Verbindung mit einem Mineralöl, und zwar einem TDAE, MES, RAE und/oder NAP.

Vorteilhaft ist die Verwendung eines Alkylbiphenyls, Arylbiphenyls, eines Alkylnaphthalins oder Arylnaphthalins oder einer Mischung hiervon, insbesondere von 1-Phenyl-2,3-di(propan-2-yl)-benzol, 1-Phenyl-4-(propan-2-yl)benzol oder einem Isomerengemisch von Isopropylbiphenyl, von 1-(Propan-2-yl)naphthalin, 2-(Propan-2-yl)naphthalin oder einem Isomerengemisch von Isopropylnaphthalin, ggf. in Kombination mit einem Mineralöl, und zwar TDAE, MES, RAE und/oder NAP, als Weichmacher für Polyurethan.

Es sind jedoch auch andere Alkylbiphenyle oder Alkylnaphthaline, z.B. 4,4'-Diisopropylbiphenyl (1-Propan-2-yl-4-(4-propan-2-ylphenyl)benzol), 3,5'-Diisopropylbiphenyl (1-Propan-2-yl-3-(5-propan-2-yl-phenyl)benzol), , 3,3'-Diisopropylbiphenyl (1-Propan-2-yl-3-(3-propan-2-yl-phenyl)benzol), 3,4'-Diisopropylbiphenyl (1-Propan-2-yl-3-(4-propan-2-yl)phenyl), 2,2'-Diisopropylbiphenyl (1-Propan-2-yl-2-(propan-2-ylphenyl)benzol), 1-Phenyl-3-(propan-2-yl)benzol, 1-Phenyl-2-(propan-2-yl)benzol, erfindungsgemäß als Weichmacher geeignet. Ebenso sind unterschiedlichste Arylbiphenyle und Arylnaphthaline erfindungsgemäß als Weichmacher für Polyurethan geeignet.

Die Formeln la bis lo zeigen einige geeignete Alkylbiphenyle oder Arylbiphenyle, die Formeln IIa bis III einige geeignete Alkylnaphthaline oder Arylnaphthaline. 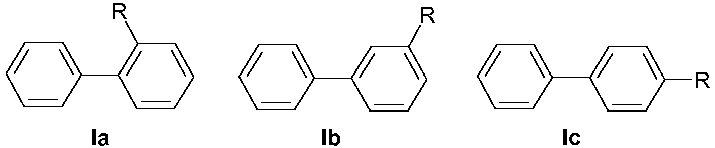 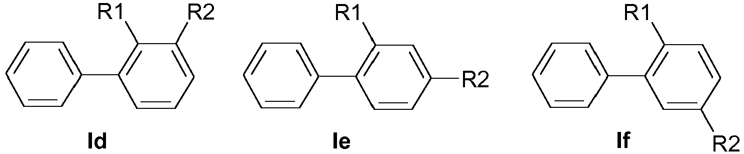 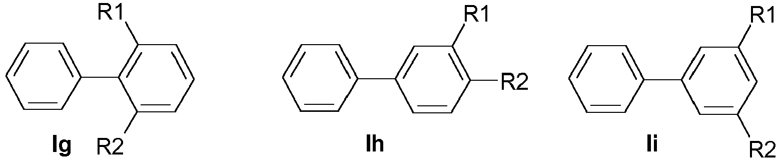 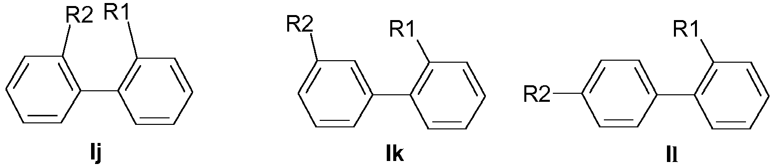 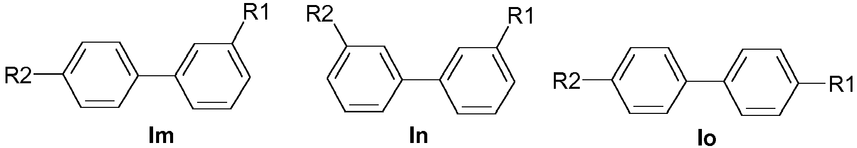 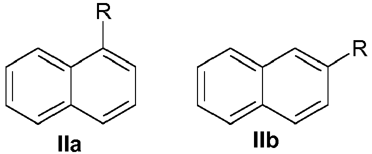 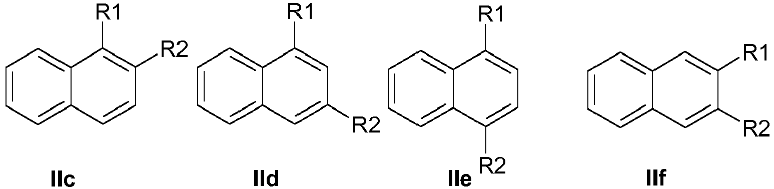 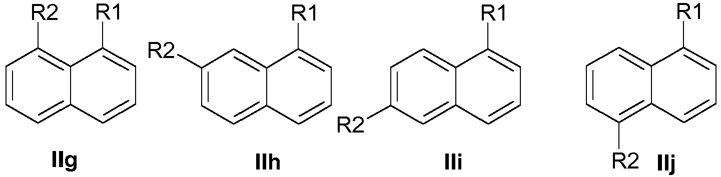 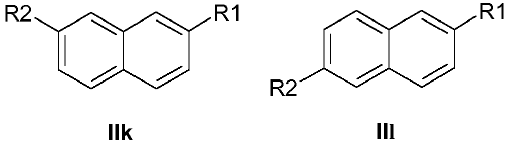 mit
R, R1, R2 = H, CH₃, C₂H₅, C₃H₇, C₄H₉, C₅H₁₁, C₆H₁₃, C₇H₁₅, C₈H₁₇, C₉H₁₉, C₁₀H₂₁, C₁₁H₂₃, C₁₂H₂₅ (jeweils verzweigt oder unverzweigt); Phenyl-, Benzyl-, Toluyl-, *ortho*-Xylyl-,
wobei R1 und R2 unabhängig voneinander gewählt werden können.

Das Polyurethan der erfindungsgemäß verwendeten Polyurethan-Zusammensetzung, enthaltend einen Weichmacher, wird bevorzugt durch ein Verfahren hergestellt, bei dem ein Diisocyanat und/oder ein Polyisocyanat, vorzugsweise in einer Lösung oder aber ohne Lösungsmittel, mit einen Diol und/oder Polyol und mindestens einem Alkylbiphenyl, Arylbiphenyl, Alkylnaphthalin oder Arylnaphthalin oder einer Mischung hiervon versetzt werden. Dabei ist die Vorsilbe "Poly-" vorliegend so zu verstehen, dass die Verbindung mindestens 3 derjeweiligen funktionellen Gruppen enthält. Unter den Begriff des Polyols fallen beispielsweise die Triole, d.h. Verbindungen mit drei OH-Gruppen.

Als Diisocyanate werden beispielsweise aromatische Diisocyanate, etwa Methylendiphenyldiisocyanat (MDI), insbesondere das Isomere 4,4'-Diphenylmethandiisocyanat, und Toluol-2,4-diisocyanat (TDI), häufig als Mischung mit Toluol-2,6-diisocyanat, verwendet. Auch aliphatische Isocyanate werden eingesetzt. Exemplarisch seien die folgenden Diisocyanate bzw. Polyisocyanate zur Herstellung von Polyurethan genannt: 3,3'-Dimethoxybenzidin-4,4'-diisocyanat, polymeres MDI, m-Phenylen-diisocyanat, 3,3'-Dimethyl-4,4'-diphenyldiisocyanat, Methylenbis-(2-methyl-p-phenylen)-diisocyanat, 3,3'-Dimethoxy-4,4'-biphenylen-diisocyanat, 2,2',5,5'-Tetramethyl-4,4'-diphenylisopropyliden-diisocyanat, 1,5-Naphthylen-diisocyanat.

Ein modifiziertes 4,4'-Diphenylmethandiisocyanat kann ebenfalls verwendet werden. Ein modifiziertes 4,4'-Diphenylmethandiisocyanat ist gegenüber reinem 4,4'-Diphenylmethandiisocyanat bevorzugt, da es eine Flüssigkeit ist, was die Verarbeitbarkeit mit dem Weichmacher erleichtert. Derartige modifizierte 4,4'-Diphenylmethandiisocyanate sind z.B. die mit den Handelsnamen erhältlichen Verbindungen Lupranat® MM 103 der BASF oder Desmodur® VP.PU 20RE15 von Bayer Material Science.

Als Diol- bzw.- Polyolkomponente eignen sich neben einfachen Diolen wie Ethylenglycol auch z.B. Polyesterpolyole oder Polyetherpolyole, um die Eigenschaften der Polyurethane zu modifizieren.

Bevorzugt beträgt die Gesamtmenge an mindestens einem Alkylbiphenyl, Arylbiphenyl, Alkylnaphthalin oder Arylnaphthalin oder einer Mischung hiervon in der Polyurethan-Zusammensetzung 10 bis 70 Gew.-%.

Eine hier beschriebene Polyurethan-Zusammensetzung ist erfindungsgemäß zur Verwendung als Reifenmaterial geeignet, insbesondere auch für Reifen, bei denen lediglich die Reifenfüllung aus Polyurethan besteht, wobei diese Füllung mit einem Reifenmantel, der das Reifenprofil umfasst, umgeben wird.

Als besonders vorteilhaft hat sich die Anwendung der hier beschriebenen als Weichmacher verwendeten Verbindungen bei Verfahren in der Reifenherstellung gezeigt, bei denen die flüssigen Komponenten zur Herstellung des Polyurethans, d.h. Polyol bzw. Diol und Polyisocyanat bzw. Diisocyanat, direkt zusammen mit dem Weichmacher zur Polyadditionsreaktion in den Reifenmantel bzw. eine Form für die Reifenfüllung gegeben werden, wobei die Komponenten zweckmäßig vor Befüllung des Reifenmantels bzw. der Form für die Reifenfüllung gründlich miteinander vermischt werden.

Um ein möglichst gleichmäßiges Polymerisationsprodukt zu erhalten, wird zunächst der Weichmacher mit einem oder den beiden Reaktanden einzeln vermischt, bevor eine Vermischung der beiden Reaktanden erfolgt, wobei die Mischung anschließend zügig in den Reifenmantel zu gießen ist, um zu gewährleisten, dass möglichst alle auszufüllenden Bereiche des Reifens gleichmäßig mit sich bildendem Polyurethan gefüllt werden.

Den Reaktanden kann außerdem Recyclat, d.h. zerkleinerte Altreifenfüllung, etwa in Granulatform, zugesetzt werden. Das Recyclat erfüllt hierbei die Funktion eines Füllstoffes

Derartige Reifenfüllungen werden üblicherweise für Reifen von Bau- und Landmaschinen eingesetzt, die erheblichen Belastungen ausgesetzt sind. Eine Anwendung im PKW- und LKW-Reifenbereich, aber auch anderen Reifeneinsatzbereichen, z.B. bei Rollstühlen oder Rollatoren, ist ebenso möglich.

Reifen, die vollständig, bzw. bei denen zumindest der Kern aus Polyurethan besteht, haben gegenüber herkömmlichen luftgefüllten Reifen diverse Vorteile. Dadurch, dass keine Luft mehr erforderlich ist, um den Reifen in Form zu halten, ergibt sich ein geringerer Wartungsaufwand. Der Luftdruck ist nicht ständig zu überprüfen, Luft nicht nachzufüllen. Die Reifen sind auf die gewünschte Härte bereits durch die gewählten Reaktionskomponenten, die Wahl und Menge des Weichmachers eingestellt. Die Reifen haben somit immer den richtigen Reifendruck.

Ein großes Problem bei herkömmlichen, luftgefüllten Reifen ist, dass diese bei Überfahren von Gegenständen schnell beschädigt werden. Insbesondere in unwegsamem Gelände, in dem häufig ungewollt spitze oder scharfe Gegenstände überfahren werden, sind hohe Anforderungen an die Reifenstabilität gestellt. Herkömmliche, luftgefüllte Reifen platzen dabei leicht, wodurch nicht nur Kosten für neue Reifen entstehen, sondern womit stets eine Gefährdung des Fahrers oder anderer Verkehrsteilnehmer einhergeht. Diesen Nachteil weisen Reifen mit Polyurethanfüllungen jedoch nicht auf. Polyurethanreifenfüllungen, die hier beschriebene Alkylbiphenyle, Arylbiphenyle, Alkylnaphthaline oder Arylnaphthaline bzw. Mischungen hiervon als Weichmacher enthalten, zeigen sich darüber hinaus sehr vorteilhaft, da die Weichmacher kennzeichnungsfreie Öle sind, die anwenderfreundlich und sicher in der Handhabung sind. Dadurch wird eine Verbesserung des Gesundheitsschutzes am Arbeitsplatz erreicht. In Gegensatz hierzu besitzt DAE (distillate aromatic extract) ein hohes gesundheitsschädliches Potential.

### Beispiele

### Beispiel 1

In Tabelle 1 sind die Ergebnisse von verschiedenen Löslichkeitssversuchen gezeigt, wobei verschiedene Verbindungen hinsichtlich ihrer Löslichkeit in einer modifizierten Diisocyanat-Verbindung, dem Desmodur® VP.PU 20RE15 der Firma Bayer MaterialScience, und in einer Polyolverbindung, dem Polyetherpolyol Desmophen® 3973 Y der Firma Bayer MaterialScience, verglichen wurden.

Dazu wurden jeweils 50 Gew.-% der jeweiligen Verbindung mit 50 Gew.-% modifiziertem MDI oder Polyetherpolyol bei Raumtemperatur vermischt. Die Mischungen wurden in Glasbehältern bei Raumtemperatur aufbewahrt. Nach 6 Wochen erfolgte eine visuelle Beurteilung der Mischungen.

**Tabelle 1**

| **Verbindung** | **Gemisch mit modifiziertem MDI** | **Gemisch mit Polyetherpolyol** |
|---|---|---|
| TDAE | zwei Phasen | zwei Phasen |
| MES | zwei Phasen | zwei Phasen |
| NAP | zwei Phasen | zwei Phasen |
| PAR | zwei Phasen | zwei Phasen |
| Methoxypropylacetat | Trübung | eine Phase |
| 2,3-Diisopropylbiphenyl | eine Phase | eine Phase |
| (1-Phenyl-2,3-di(propan-2-yl)benzol) | | |
| 1-Phenyl-4-(propan-2-yl)benzol | eine Phase | eine Phase |
| 1-Isopropylnaphthalin (1-Propan-2-yl-naphthalin) | eine Phase | eine Phase |

Für die Verbindungen 2,3-Diisopropylbiphenyl, 1-Isopropylnaphthalin und ein 1-Phenyl-4-(propan-2-yl)benzol war jeweils nur eine Phase zu erkennen. Diese Verbindungen haben somit eine gute Löslichkeit sowohl in dem Diisocyanat als auch in dem Polyol gezeigt, wodurch sich der Weichmacher gleichmäßig in dem Reaktionsansatz verteilen lässt. Für die anderen untersuchten Verbindungen war entweder eine Phasentrennung zu beobachten oder eine begrenzte Löslichkeit, welche sich in einer Trübung des Gemisches äußerte.

### Beispiel 2

14.4 Gew.-% eines modifizierten Diisocyanates, Desmodur® VP.PU 20RE15 oder Lupranat MM103 oder Desmodur CD-S, wurden auf eine Temperatur von etwa 35°C erwärmt und mit 85.6 Gew.-% Extenderöl Alkylnaphthalin (Ruetasolv MP) oder Alkylbiphenyl (Ruetasolv BP 4103) bzw. Mischungen hiervon sowie zum Vergleich mit DAE (Tudalen 81) versetzt. Die Komponenten wurden für 10 Minuten unter Verwendung eines Rührers vermischt. Die Lösung wurde filtriert und in einen Behälter dekantiert. Argon wurde auf die Lösung gegeben, bevor der Behälter versiegelt worden ist. Diese Mischung bildete Komponente A.

Anschließend wurden 84,80 Gew.-% des Polyetherpolyols Desmophen® 3973 Y oder Carpol GP-6515 oder Polyol 1374, 0,05 Gew.- % Dibutylzinndilaurat als Katalysator, 0,11 Gew.- % Wasser, 0,09 Gew.-% Butylhydroxytoluol als Antioxidans, 1,10 Gew.- % des Tensids, Troysol LAC oder Niax L-3684 oder Niax L-2171, und 12,11 Gew.- % des Extenderöls vermischt. Die Mischung wurde auf 60°C erwärmt und währenddessen weiterhin gerührt. Zu der warmen Mischung wurden 1,74 Gew.- % meta-Phenylendiamin gegeben. Die Mischung wurde für weitere 10 min gerührt. Diese Mischung bildete Komponente B.

Die Komponenten A und B wurden in einem Volumenverhältnis von 1:1 miteinander vermischt. Es wurde ein Polyurethan erhalten.

Tabelle 2 zeigt die Ergebnisse der Mischungsprüfung (Härtebestimmung) der Mischungen auf Basis Komponenten A und Komponenten B. Die Bestimmung der Härte Shore A erfolgte nach DIN 53505. Die Härte der Polyurethanmischungen 2 bis 5 sind vergleichbar der Härte der Mischungen 1, die als Weichmacher üblicherweise verwendete DAE (Tudalen 81) enthalten.

**Tabelle 2. Härtebestimmung der Mischungen auf Basis Komponenten A und Komponenten B**

| **Mischung** | **Komponente A** | **Komponente B** | **Härte [Shore A]** |
|---|---|---|---|
| 1 | DAE (Tudalen 81) + Desmodur CD-S (Referenz) | DAE (Tudalen 81) + Polyol 1374 (Referenz) | 18 |
| 2 | Alkylnaphthalin (Ruetasolv MP) + Desmodur CD_S | Alkylnaphthalin (Ruetasolv MP) + Polyol 1374 | 20 |
| 3 | Alkylbiphenyl (Ruetasolv BP 4103) + Desmodur CD-S | Alkylbiphenyl (Ruetasolv BP 4103) + Polyol 1374 | 22 |
| 4 | Alkylnaphtalin (Ruetasolv MP) / Alkylbiphenyl (Ruetasolv BP 4103) (50% / 50%) + Desmodur CD | Alklnaphtalin (Ruetasolv MP) / Alkylbiphenyl (Ruetasolv BP 4103) (50%:50%) + Polyol 1374 | 21 |
| 5 | Ruetasolv MP / Ruetasolv BP 4103 / RAE (30% / 66% / 4%) + Desmodur CD | Ruetasolv MP / Ruetasolv BP 4103 / RAE (30% / 66% / 4%) + Polyol 1374 | 18 |

Durch Reaktion der Komponenten A und B wurde ein Film mit einer Dicke von etwa 2 mm erzeugt. Der Film wurde in drei Stufen gehärtet: 16 h bei 24°C, 24 h bei 65°C und 7 Tage bei 24°C.

## Patentansprüche

1. Verwendung einer Polyurethan-Zusammensetzung, enthaltend mindestens
a) ein Polyurethan, hergestellt aus
i) einem Polyisocyanat und/oder einem Diisocyanat und
ii) einem Polyol und/oder einem Diol,
und
b) ein Alkylbiphenyl oder Arylbiphenyl oder ein Alkylnaphthatin oder Arylnaphthalin oder eine Mischung hiervon,
für Reifenfüllungen,

2. Verwendung gemäß Patentanspruch 1, wobei als Alkylrest ein Isopropylrest vorliegt.

3. Verwendung gemäß Anspruch 1 oder 2, enthaltend mindestens eine Verbindung, ausgewählt aus der Gruppe der Diisopropylbiphenyle, Isopropylnaphthaline oder der Isopropylbiphenyle.

4. Verwendung gemäß einem der vorhergehenden Ansprüche, wobei der Arylrest des Arylbiphenyls und/oder des Arylnaphthalins ein Phenyl-, Benzyl-, Toluyl- oder *ortho*-Xylylrest ist.

5. Verwendung gemäß einem der vorhergehenden Ansprüche, enthaltend mindestens 1-Phenyl-2,3-di(propan-2-yl)-benzol, 1-Phenyl-4-(propan-2-yl)benzol oder ein Isomerengemisch von Isopropylbiphenyl, 1-(Propan-2-yl)naphthalin, 2-(Propan-2-yl)naphthalin oder ein Isomerengemisch von Isopropylnaphthalin.

6. Verwendung gemäß einem der vorhergehenden Ansprüche, wobei die Gesamtmenge an mindestens einem Alkylbiphenyl, Arylbiphenyl, Alkylnaphthalin oder Arylnaphthalin oder einer Mischung hiervon 10 bis 70 Gew.-% beträgt.

7. Verwendung nach einem der vorhergehenden Ansprüche, wobei die Polyurethan-Zusammensetzung neben dem Alkylbiphenyl oder Arylbiphenyl oder Alkylnaphthalin oder Arylnaphthalin oder einer Mischung hiervon ein TDAE, MES, RAE oder NAP enthält.

## Claims

1. Use of a polyurethane composition, containing at least
a) a polyurethane, manufactured from
i. a polyisocyanate and/or a diisocyanate and
ii. a polyol and/or a diol
and
b) an alkylbiphenyl or arylbiphenyl or an alkylnaphthalene or arylnaphthalene or a mixture thereof for tyre fillings.

2. Use according to Claim 1, whereby an isopropyl radical is present as an alkyl radical.

3. Use according to Claim 1 or 2, containing at least one compound selected from the group consisting of the diisopropylbiphenyls, isopropylnaphthalenes or isopropylbiphenyls.

4. Use according to any one of the preceding claims, whereby the aryl radical of the arylbiphenyl and/or the arylnaphthalene is a phenyl, benzyl, tolulyl or *ortho*-xylyl radical.

5. Use according to any one of the preceding claims, containing at least 1-phenyl-2,3-di(propan-2-yl)benzene, 1-phenyl-4-(propan-2-yl)benzene or a mixture of isomers of isopropylbiphenyl, 1-(propan-2-yl)naphthalene, 2-(propan-2-yl)naphthalene or a mixture of isomers of isopropylnaphthalene.

6. Use according to any one of the preceding claims, whereby the total quantity of at least one alkylbiphenyl, arylbiphenyl, alkylnaphthalene or arylnaphthalene or a mixture thereof is 10 to 70 % w/w.

7. Use according to any one of the preceding claims, whereby the polyurethane composition, alongside the alkylbiphenyl or arylbiphenyl or alkylnaphthalene or arylnaphthalene or a mixture thereof contains a TDAE, MES, RAE or NAP.

## Revendications

1. Utilisation d'une composition de polyuréthane, contenant au moins
a) un polyuréthane, fabriqué à partir
i) d'un polyisocyanate et/ou d'un diisocyanate, et
ii) d'un polyol et/ou d'un diol
et
b) un alkylbiphényle ou un arylbiphényle ou un alkylnaphtalène ou un arylnaphtalène ou un mélange de ces derniers
pour des remplissages de pneus.

2. Utilisation selon la revendication 1, dans laquelle un radical isopropyle se présente sous la forme d'un radical alkyle.

3. Utilisation selon la revendication 1 ou 2, contenant au moins un composé choisi parmi le groupe des diisopropylbiphényles, des isopropylnaphtalènes ou des isospropylbiphényles.

4. Utilisation selon l'une quelconque des revendications précédentes, dans laquelle le radical aryle de l'arylbiphényle et/ou de l'arylnaphatlène est un radical phényle, benzyle, toluyle ou ortho-xylyle.

5. Utilisation selon l'une quelconque des revendications précédentes, contenant au moins du 1-phényl-2,3-di(propan-2-yl)-benzène, du 1-phényl-4-(propan-2-yl)benzène ou un mélange isomère d'isopropylbiphényle, du 1-(propan-2-yl)naphtalène, 2-(propan-2-yl) naphtalène ou un mélange isomère d'isopropylnaphtalène.

6. Utilisation selon l'une quelconque des revendications précédentes, dans laquelle la quantité totale n au moins un alkylbiphényle, en arylbiphényle, en alkylnaphtalène ou arylnaphtalène ou un mélange de ces derniers va de 10 à 70 % en poids.

7. Utilisation selon l'une quelconque des revendications précédentes, dans laquelle la composition de polyuréthane contient, outre l'alkylbiphényle ou l'arylbiphényle ou l'alkylnaphtalène ou l'arylnaphtalène ou un mélange de ces derniers contenant un TDAE (extrait aromatique de distillat traité), un MES (solvat d'extraction modérée), un RAE (extrait aromatique résiduel) ou un NAP.
